# EUROPEAN PATENT APPLICATION

(11) **EP 4 804 327 A1**
(43) Date of publication of application: **09.09.2026**
(21) Application number: 26725476.1
(22) Date of filing: 12.01.2026
(51) Int. Cl.: H01M 50/59, H01M 50/258, H01M 50/204, H01M 50/249, H01M 50/244

(54) **BATTERY APPARATUS AND ELECTRIC DEVICE**

(30) Priority: 14.01.2025 CN 202520081873 U
(71) Applicant: Contemporary Amperex Technology Co., Limited, Ningde, Fujian 352100 (CN)
(72) Inventor: GAO, Weiqiang, Ningde, Fujian 352100 (CN); SHEN, Dan, Ningde, Fujian 352100 (CN); LI, Yao, Ningde, Fujian 352100 (CN)
(74) Representative: Lorenz Seidler Gossel Part. mbB
(86) International application number: PCT/CN2026/072036
(87) International publication number: WO 2026/153276

(57) **Abstract**

The present application provides a battery apparatus and an electrical device, solving the problem that electrical arcing is likely to occur between an upper box body and a live part of a battery cell. The battery apparatus includes: a battery cell assembly including a plurality of battery cells having electrode terminals; a box body including a first portion and a second portion, where the second portion covers the first portion to form an accommodating cavity for accommodating the battery cell assembly; and a first surface of the second portion has at least one of a protrusion portion and an opening portion, the first surface being a surface of the second portion facing the electrode terminals; and an insulating member located between the first surface of the second portion and the battery cell assembly. The insulating member includes a first insulating member and a second insulating member, where the first insulating member is disposed opposite to the first surface of the second portion, and has a hollowed-out portion exposing at least one of the protrusion portion and the opening portion; and the second insulating member is disposed opposite to at least one of the protrusion and a portion of the first surface exposed through the hollowed-out portion, and has a first through hole communicating with the opening portion.

## Description

### CROSS-REFERENCE TO RELATED APPLICATION

The present application claims priority and based on Chinese Patent Application No. 2025200818733 filed on January 14, 2025, the entire contents of which are incorporated herein by reference.

### TECHNICAL FIELD

The present application relates to the technical field of batteries, and in particular, to a battery apparatus and an electrical device.

### BACKGROUND

At present, from the development of market situation, the application of battery apparatuses is becoming increasingly more extensive. The battery apparatus may be a power battery, and the battery apparatus may also be an energy storage battery.

The battery apparatus includes an upper box body, a lower box body, and a battery cell, where the upper box body covers the lower box body to accommodate the battery cell. Electrical arcing may occur between the upper box body and a live part of the battery cell, causing thermal runaway of the battery cell, and consequently leading to safety accidents such as explosion of the battery apparatus.

### SUMMARY OF THE INVENTION

The main technical problem addressed by the present application is to provide a battery apparatus and an electrical device, solving the problem that electrical arcing is very likely to occur between an upper box body and a live part of a battery cell.

To solve the aforementioned technical problem, a first technical solution adopted by the present application is to provide a battery apparatus. The battery apparatus includes a battery cell assembly, a box body, and an insulating member. The battery cell assembly includes a plurality of battery cells, the battery cells having electrode terminals. The box body includes a first portion and a second portion, where the second portion covers the first portion to form an accommodating cavity for accommodating the battery cell assembly; and a first surface of the second portion has at least one of a protrusion portion and an opening portion, the first surface being a surface of the second portion facing the electrode terminals. The insulating member is located between the first surface of the second portion and the battery cell assembly. The insulating member includes a first insulating member and a second insulating member, where the first insulating member is disposed opposite to the first surface of the second portion, and the first insulating member has a hollowed-out portion, the hollowed-out portion exposing at least one of the protrusion portion and the opening portion; and the second insulating member is disposed opposite to at least one of the protrusion portion and a portion of the first surface exposed through the hollowed-out portion, and has a first through hole communicating with the opening portion.

In this embodiment, the first insulating member is disposed opposite to a portion of the first surface excluding the protrusion portion and/or the opening portion, and the second insulating member is disposed opposite to the protrusion portion and/or the opening portion on the first surface, thereby improving the insulation protection capability of the second portion, reducing the probability of electrical arcing between the live part of the battery cell assembly and the second portion, and decreasing the probability of thermal runaway of the battery apparatus, and consequently improving the reliability of the battery apparatus.

In some embodiments, an overlapping region exists between an edge of the first insulating member and an edge of the second insulating member; and the edge of the second insulating member is located between the edge of the first insulating member and the first surface.

In this embodiment, the overlapping region exists between the edge of the first insulating member and the edge of the second insulating member; and the edge of the second insulating member is located between the edge of the first insulating member and the first surface. This can enhance the firmness of the connection between the first insulating member and the second insulating member, thereby reducing the probability of the second insulating member detaching from the protrusion portion and/or the opening portion. It also solves the problem of a gap existing between the first insulating member and the second insulating member, thereby further improving the insulation protection capability of the second portion, further reducing the probability of electrical arcing between the live part of the battery cell assembly and the second portion, and further decreasing the probability of thermal runaway of the battery apparatus.

In some embodiments, a width of the overlapping region is greater than or equal to 2 mm.

In some embodiments, the second insulating member includes a first covering portion covering a side of the protrusion portion facing the battery cell assembly, a second covering portion located at the portion of the first surface exposed through the hollowed-out portion and spaced apart from the protrusion portion, and a connecting portion connecting the first covering portion and the second covering portion, the connecting portion being disposed in a suspended manner.

In some embodiments, the second insulating member includes a first covering portion covering a side of the protrusion portion facing the battery cell assembly, a second covering portion located at the portion of the first surface exposed through the hollowed-out portion and disposed in contact with the protrusion portion, and a third covering portion located on a side surface of the protrusion portion.

In this embodiment, the second insulating member includes the first covering portion, the connecting portion, and the second covering portion, which can reduce the difficulty of installation of the second insulating member. The second insulating member includes the first covering portion, the third covering portion, and the second covering portion, which can increase the protection capability of the second insulating member.

In some embodiments, the protrusion portion includes a plurality of reinforcing ribs, the plurality of reinforcing ribs extending from one side of the first surface of the second portion to an opposite side, and dividing the first surface into a plurality of sub-surfaces; the first insulating member includes a plurality of first insulating sub-members, one of the first insulating sub-members covering one of the sub-surfaces, and one said hollowed-out portion for exposing one of the reinforcing ribs being formed between two adjacent ones of the first insulating sub-members; and the number of the second insulating members is plural, and one of the second insulating members covers one of the reinforcing ribs.

In this embodiment, the provided reinforcing ribs can increase the strength of the second portion. The configuration in which the second insulating member covers the reinforcing ribs can reduce the probability of electrical arcing between the reinforcing ribs and the live part, thereby improving the reliability of the battery apparatus.

In some embodiments, the battery apparatus further includes a mounting member and a connecting member, where the mounting member is disposed within the first portion; the opening portion is a mounting hole penetrating the second portion; and the first through hole exposes the mounting hole; and the second portion covers the first portion, and the connecting member passes through the mounting hole and the first through hole from outside the second portion and is then connected to the mounting member.

In this embodiment, by using the mounting member and the connecting member, the firmness of the connection between the first portion and the second portion can be enhanced. The configuration in which the second insulating member covers the mounting hole can reduce the probability of electrical arcing between the mounting hole and the live part, thereby improving the reliability of the battery apparatus.

In some embodiments, the first insulating member is an integrally formed structure; and the hollowed-out portion for exposing the mounting hole is a second through hole, where an overlapping region exists between an edge of the second through hole of the first insulating member and an outer edge of the second insulating member; and the outer edge of the second insulating member is located between the edge of the second through hole of the first insulating member and the first surface.

In this embodiment, the first insulating member being an integrally formed structure can facilitate disposing the first insulating member on the first surface.

In some embodiments, the first insulating member includes two sub-insulating members, the two sub-insulating members being spaced apart to constitute the hollowed-out portion for exposing the mounting hole.

In this embodiment, the provided two sub-insulating members can decrease the difficulty of installation with the second insulating member, making installation more flexible.

In some embodiments, the battery apparatus further includes a bushing padded between the mounting member and the first surface, where the bushing has a third through hole for the connecting member to pass through; and an edge of the first through hole of the second insulating member is at least located on a side of an outer edge of the bushing facing away from the first surface.

In this embodiment, the provided bushing can reduce the probability of loosening between the connecting member and the mounting member. The edge of the first through hole of the second insulating member being at least located on the side of the outer edge of the bushing facing away from the first surface can reduce the portion of the bushing exposed through the first through hole of the second insulating member, thereby reducing the probability of electrical arcing between the bushing and the live part, and consequently improving the reliability of the battery apparatus.

In some embodiments, a flexibility coefficient of the first insulating member is less than a flexibility coefficient of the second insulating member.

In this embodiment, the flexibility coefficient of the first insulating member being less than the flexibility coefficient of the second insulating member allows the second insulating member to be more conveniently disposed at the protrusion portion and the opening portion.

In some embodiments, the first insulating member includes a mica plate or a polypropylene insulating film; and the second insulating member includes a sprayed insulating layer or mica paper.

In this embodiment, the first insulating member including the mica plate or the polypropylene insulating film and the second insulating member including the sprayed insulating layer or mica paper can result in lower costs for the first insulating member and the second insulating member.

In some embodiments, the first insulating member covers the first surface of the second portion; and the second insulating member covers the protrusion portion.

In some embodiments, the first insulating member covers the first surface of the second portion; and the second insulating member covers the portion of the first surface exposed through the hollowed-out portion.

In this embodiment, adopting a covering manner can enable the insulating member and the second portion to form an integral whole, facilitating assembly with the first portion.

To solve the aforementioned technical problem, a second technical solution provided in the present application is to provide an electrical device. The electrical device includes the aforementioned battery apparatus and an electrical component, the electrical component being electrically connected to the battery apparatus. Since the electrical device contains the aforementioned battery apparatus, the electrical device has the same effects as the aforementioned battery apparatus.

### BRIEF DESCRIPTION OF THE DRAWINGS

In order to illustrate the technical solutions in the embodiments of the present application more clearly, the drawings to be used in description of the embodiments will be briefly introduced below. Obviously, the drawings described below are only some embodiments of the present application. For those of ordinary skill in the art, other drawings can also be obtained based on these drawings without any creative effort.
FIG. 1 is a schematic structural diagram of an electrical device according to the present application;
FIG. 2 is a schematic structural diagram of a battery apparatus according to the present application;
FIG. 3 is a bottom view of a second portion according to the present application;
FIG. 4 is a bottom view of the second portion of FIG. 3 provided with an insulating member;
FIG. 5 is a bottom view of another second portion according to the present application;
FIG. 6 is a bottom view of the second portion of FIG. 5 provided with an insulating member;
FIG. 7 is a bottom view of yet another second portion according to the present application;
FIG. 8 is a bottom view of the second portion of FIG. 7 provided with an insulating member;
FIG. 9 is a cross-sectional view taken along line B-B in FIG. 8;
FIG. 10 is a schematic structural diagram of a battery cell according to the present application;
FIG. 11 is a top view of a battery apparatus according to the present application;
FIG. 12 is a schematic structural diagram of a first portion according to the present application;
FIG. 13 is a cross-sectional view taken along line A-A in FIG. 11;
FIG. 14 is a schematic structural diagram of a first insulating member according to the present application; and
FIG. 15 is a schematic structural diagram of another first insulating member according to the present application.

In the drawings: 1, battery apparatus; 11, box body; 111, second portion; 1111, first surface; 11111, sub-surface; 1112, protrusion portion; 11121, reinforcing rib; 1113, opening portion; 11131, mounting hole; 112, first portion; 12, battery cell; 121, connecting component; 122, cover plate; 123, terminal post; 124, safety vent; 125, electrode assembly; 126, case; 13, connecting member; 14, partition beam; 15, mounting member; 16, insulating member; 161, first insulating member; 1611, hollowed-out portion; 16111, second hollowed-out portion; 16112, first hollowed-out portion; 1623, first through hole; 1613, sub-insulating member; 1614, first insulating sub-member; 162, second insulating member; 1621, second insulating portion; 1622, first insulating portion; 1624, first covering portion; 1625, connecting portion; 1627, second covering portion; 17, bushing; 171, third through hole; 18, battery cell assembly; 2, electrical component.

### DETAILED DESCRIPTION

The solutions of the embodiments of the present application are described in detail below in conjunction with the drawings in the description.

In the following description, for the purpose of explanation rather than limitation, specific details such as specific system structures, interfaces, and technologies are provided to facilitate thoroughly understanding the present application.

The technical solutions in the embodiments of the present application will be clearly and completely described below with reference to the accompanying drawings of the embodiments of the present application. Apparently, the embodiments described are merely some rather than all of the embodiments of the present application. All the other embodiments obtained by a person of ordinary skill in the art based on the embodiments of the present application without any creative effort shall fall within the scope of protection of the present application.

In the present application, the terms "first", "second", and "third" are used for descriptive purposes only, and cannot be construed as indicating or implying relative importance or implicitly indicating the number of technical features indicated. Therefore, the features defined with "first", "second", and "third" may explicitly or implicitly include at least one of the features. In the description of the present application, the meaning of "a plurality of" is at least two, for example, two or three, unless otherwise explicitly and specifically defined. All directional indications (such as up, down, left, right, forward, back, ...) in the embodiments of the present application are only used to explain the relative positional relationship, the movement situation, etc., between the various components in a particular posture (as shown in the accompanying drawings), and that the directional indications are correspondingly changed if the particular posture is changed. In addition, the terms "includes, including, comprises, and comprising" and "has, have, and having" as well as any variations thereof are intended to cover nonexclusive inclusion. For example, a process, method, system, product, or apparatus comprising a series of steps or units is not limited to the listed steps or units, but may optionally also include steps or units not listed, or optionally include other steps or units inherent to these processes, methods, products, or apparatus.

The "embodiment" mentioned herein means that specific features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

At present, from the development of market situation, the application of battery apparatuses is becoming increasingly more extensive. The battery apparatus may be a power battery. A power battery is a power source that provides motive power for tools. Power batteries often refer to storage batteries that provide power for transportation vehicles such as electric vehicles, electric trains, electric bicycles, golf carts, as well as for aerospace applications. Of course, the battery apparatus may also be an energy storage battery. An energy storage battery refers to a storage battery used for storing energy in renewable energy power stations such as hydroelectric, thermal power, wind power, and solar power stations. With the continuous expansion of the application field of battery apparatuses, the market demand thereof is also constantly expanding.

The battery apparatus may include an upper box body, a lower box body, and a battery cell, where the upper box body covers the lower box body to accommodate the battery cell.

Reinforcing ribs are provided on an inner surface of the upper box body, and an insulating structure (for example, a mica sheet, etc.) is provided on the inner surface of the upper box body between two adjacent reinforcing ribs. Since no insulating structure is provided on the reinforcing rib, the insulation property of the reinforcing rib of the upper box body is poor; and electrical arcing is very likely to occur between the reinforcing rib and a live part (for example, a terminal post) of the battery cell, causing thermal runaway of the battery cell, and consequently leading to safety accidents such as explosion of the battery apparatus.

A through opening is provided on the inner surface of the upper box body, and a mounting member is provided inside the lower box body. After the upper box body and the lower box body are covered together, a connecting member passes through the through opening from outside the upper box body to connect with the mounting member. Since the insulating structure exposes a portion of the inner surface of the upper box body that is located at the through opening, the insulation property of the upper box body is poor; and electrical arcing is very likely to occur between the portion of the inner surface of the upper box body that is exposed through the insulating structure and a live part (for example, a terminal post) of the battery cell, causing thermal runaway of the battery cell, and consequently leading to safety accidents such as explosion of the battery apparatus.

In order to solve the problem that electrical arcing is very likely to occur between the upper box body and the live part of the battery cell, embodiments of the present application provide a battery apparatus. The battery apparatus includes a battery cell assembly, a box body, and an insulating member. The battery cell assembly includes a plurality of battery cells, the battery cells having electrode terminals. The box body includes a first portion and a second portion, where the second portion covers the first portion to form an accommodating cavity for accommodating the battery cell assembly; and a first surface of the second portion has a protrusion portion and/or an opening portion, the first surface being a surface of the second portion facing the electrode terminals. The insulating member is located between the first surface of the second portion and the battery cell assembly. The insulating member includes a first insulating member and a second insulating member, where the first insulating member is disposed opposite to the first surface of the second portion, and the first insulating member has a hollowed-out portion, the hollowed-out portion exposing the protrusion portion and/or the opening portion; and the second insulating member is disposed opposite to the protrusion portion, and/or the second insulating member is disposed opposite to a portion of the first surface exposed through the hollowed-out portion, and has a first through hole communicating with the opening portion. The first insulating member is disposed opposite to a portion of the first surface excluding the protrusion portion and/or the opening portion, and the second insulating member is disposed opposite to the protrusion portion and/or the opening portion on the first surface, thereby improving the insulation protection capability of the second portion, reducing the probability of electrical arcing between the live part of the battery cell assembly and the second portion, and decreasing the probability of thermal runaway of the battery apparatus, and consequently improving the reliability of the battery apparatus.

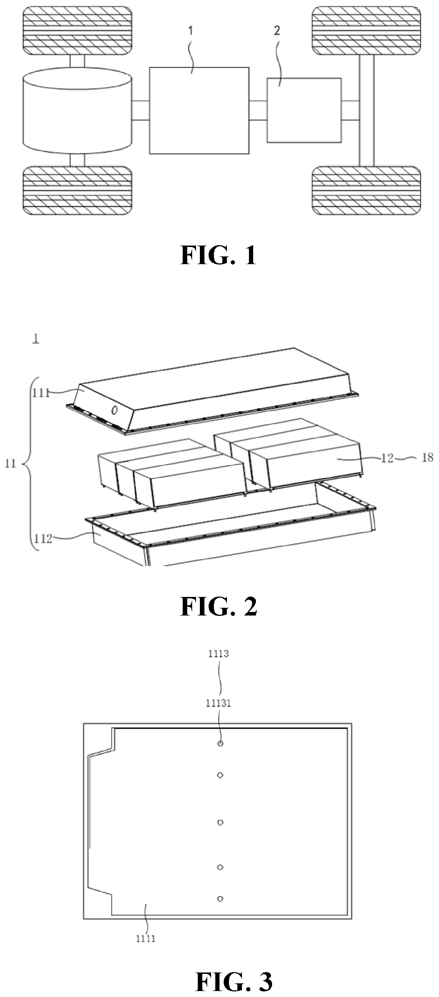

Embodiments of the present application provide an electrical device. Referring to FIG. 1, the electrical device may include a device main body and a battery apparatus, where the battery apparatus is disposed in the device main body. The battery apparatus is configured to supply power to an electrical component of the device main body, enabling the device main body to operate.

The electrical component may be an element capable of using electricity; for example, the electrical component may be a controller, an electronic component, or the like. The controller may be a central processing unit (CPU), a digital signal processor (DSP), an application-specific integrated circuit (ASIC), a field-programmable gate array (FPGA), or other programmable logic devices, discrete gate or transistor logic devices, discrete hardware components, or the like.

The electrical device may be a vehicle, a mobile phone, a portable device, a laptop, a ship, a spacecraft, an electric toy, an electric tool, and the like. The vehicle may be a fuel vehicle, a gas vehicle, or a new energy vehicle, and the new energy vehicle may be a battery electric vehicle, a hybrid electric vehicle, an extended range vehicle, and the like. The spacecraft includes an airplane, a rocket, a space shuttle, a spaceship, and the like. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer. For the convenience of illustration, the following embodiments are illustrated with the electrical device being a vehicle as an example.

In some examples, the electrical device may be a vehicle, and the device main body may be a vehicle frame, where the battery apparatus is installed on the vehicle frame. The electrical component may be a light of the vehicle (e.g., a headlight, a taillight, etc.), a display screen, an instrument panel, a control system (e.g., a controller), etc. The electrical component is installed on the vehicle body.

Embodiments of the present application provide a battery apparatus. Referring to FIG. 2 to FIG. 9. The battery apparatus 1 includes a battery cell assembly 18, a box body 11, and an insulating member 16. The battery cell assembly 18 includes a plurality of battery cells 12, the battery cells 12 having electrode terminals. The box body 11 includes a first portion 112 and a second portion 111, where the second portion 111 covers the first portion 112 to form an accommodating cavity for accommodating the battery cell assembly 18; and a first surface 1111 of the second portion 111 has a protrusion portion 1112 and/or an opening portion 1113, the first surface 1111 being a surface of the second portion 111 facing the electrode terminals. The insulating member 16 is located between the first surface 1111 of the second portion 111 and the battery cell assembly 18. The insulating member 16 includes a first insulating member 161 and a second insulating member 162, where the first insulating member 161 is disposed opposite to the first surface 1111 of the second portion 111, and the first insulating member 161 has a hollowed-out portion 1611, the hollowed-out portion 1611 exposing the protrusion portion 1112 and/or the opening portion 1113; and the second insulating member 162 is disposed opposite to the protrusion portion 1112, and/or the second insulating member 162 is disposed opposite to the portion of the first surface 1111 exposed through the hollowed-out portion 1611, and has a first through hole 1623 communicating with the opening portion 1113.

In some examples, the first insulating member 161 covers the first surface 1111 of the second portion 111; and the second insulating member 162 covers the protrusion portion 1112, and/or the second insulating member 162 covers the portion of the first surface 1111 exposed through the hollowed-out portion 1611.

In some other examples, the first insulating member 161 covers a first sub-surface of a surface of the battery cell assembly 18 proximate to the first surface 1111, and the first sub-surface is disposed opposite to the first surface 1111. The second insulating member 162 covers a second sub-surface of the surface of the battery cell assembly 18 proximate to the first surface 1111, the second sub-surface being disposed opposite to the protrusion portion 1112, and/or the second insulating member 162 covers a third sub-surface, which is exposed through the hollowed-out portion 1611, of the surface of the battery cell assembly 18 proximate to the first surface 1111.

Hereinafter, a configuration where the first insulating member 161 covers the first surface 1111 of the second portion 111; and the second insulating member 162 covers the protrusion portion 1112, and/or the second insulating member 162 covers the portion of the first surface 1111 exposed through the hollowed-out portion 1611 is taken as an example for illustration.

The configuration where the first insulating member 161 covers the first surface 1111 of the second portion 111 can be understood as follows: the first insulating member 161 covers a portion of the first surface 1111 excluding the protrusion portion 1112 and/or the opening portion 1113.

The hollowed-out portion 1611 may include a first hollowed-out portion 16112 and/or a second hollowed-out portion 16111, where the first hollowed-out portion 16112 exposes the protrusion portion 1112, and the second hollowed-out portion 16111 exposes the opening portion 1113.

The second insulating member 162 may include a first insulating portion 1622 and/or a second insulating portion 1621, where the first insulating portion 1622 is disposed opposite to the protrusion portion 1112; and the second insulating portion 1621 is disposed opposite to the portion of the first surface 1111 exposed through the hollowed-out portion 1611 (i.e., the second hollowed-out portion 16111), and has the first through hole 1623 communicating with the opening portion 1113. In some examples, the first insulating portion 1622 covers the protrusion portion 1112; and the second insulating portion 1621 covers the portion of the first surface 1111 exposed through the hollowed-out portion 1611 (i.e., the second hollowed-out portion 16111), and has the first through hole 1623 communicating with the opening portion 1113.

The first insulating portion 1622 is adapted to the protrusion portion 1112. For example, the protrusion portion 1112 is a reinforcing rib 11121, and the first insulating portion 1622 is an elongated structure. The second insulating portion 1621 is adapted to the opening portion 1113. For example, the opening portion 1113 is a through hole, and the second insulating portion 1621 is an annular structure.

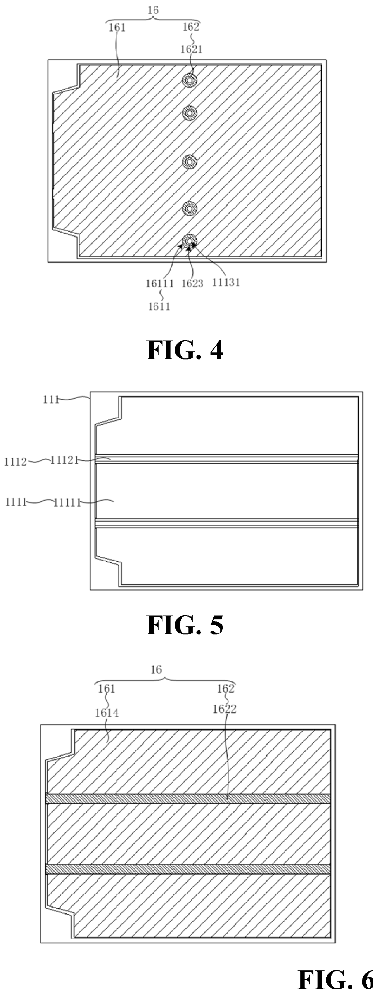

In some examples, referring to FIG. 3 and FIG. 4, the first surface 1111 of the second portion 111 only has the opening portion 1113. In this case, the hollowed-out portion 1611 (i.e., the second hollowed-out portion 16111) exposes the opening portion 1113, and the second insulating member 162 (i.e., the second insulating portion 1621) covers the portion of the first surface 1111 exposed through the hollowed-out portion 1611 (i.e., the second hollowed-out portion 16111), and has the first through hole 1623 communicating with the opening portion 1113. The opening portion 1113 can be understood as a structure with an opening on the first surface 1111. This opening may extend to penetrate through the second portion 111, in which case this opening portion 1113 may be called a through hole. The opening may also extend without penetrating through the second portion 111, in which case this opening portion 1113 may be called a recessed groove. The opening portion 1113 may include at least one of a through hole, a recessed groove, etc. For example, the opening portion 1113 is a mounting hole 11131, and the second hollowed-out portion 16111 is a second through hole. The second hollowed-out portion 16111 (i.e., the second through hole) exposes the first through hole 1623 and the mounting hole 11131. The first through hole 1623 exposes the mounting hole 11131.

In some other examples, referring to FIG. 5 and FIG. 6, the first surface 1111 of the second portion 111 only has the protrusion portion 1112. In this case, the hollowed-out portion 1611 (i.e., the first hollowed-out portion 16112) exposes the protrusion portion 1112, and the second insulating member 162 (i.e., the first insulating portion 1622) covers the protrusion portion 1112. The protrusion portion 1112 can be understood as a structure protruding from the first surface 1111. The protrusion portion 1112 may include at least one of a reinforcing rib 11121, a protrusion block, etc. For example, the protrusion portion 1112 is a reinforcing rib 11121.

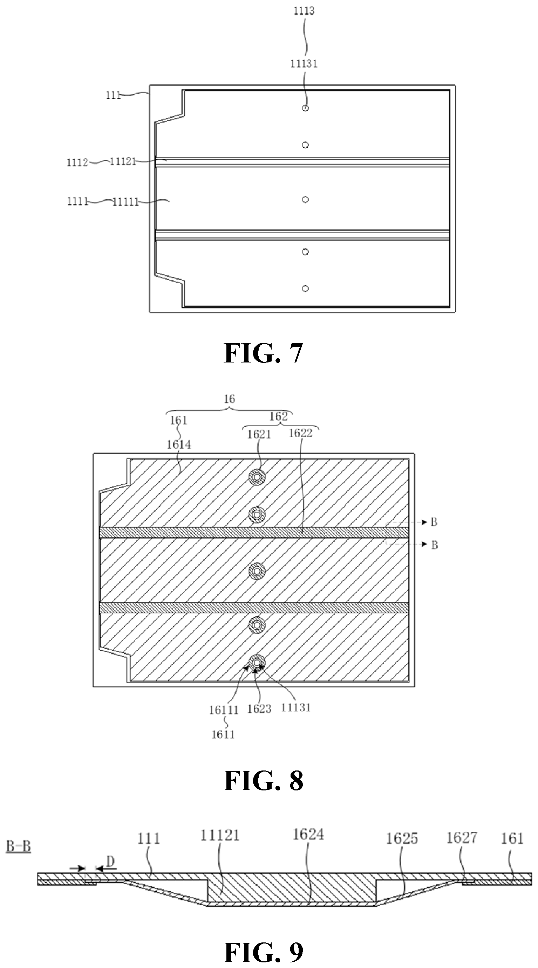

In some other examples, referring to FIG. 7 to FIG. 9, the first surface 1111 of the second portion 111 has the protrusion portion 1112 and the opening portion 1113. In this case, the hollowed-out portion 1611 exposes the protrusion portion 1112 and the opening portion 1113 (i.e., the second hollowed-out portion 16111 exposes the opening portion 1113, and the first hollowed-out portion 16112 exposes the protrusion portion 1112); the second insulating member 162 (i.e., the first insulating portion 1622) covers the protrusion portion 1112; and the second insulating member 162 (i.e., the second insulating portion 1621) also covers the portion of the first surface 1111 exposed through the hollowed-out portion 1611, and has the first through hole 1623 communicating with the opening portion 1113. For example, the protrusion portion 1112 and the opening portion 1113 are staggered from each other.

In some examples, the first insulating member 161 may be an integrally formed structure, and the first insulating member 161 is provided with the second hollowed-out portion 16111 and the first hollowed-out portion 16112. In some other examples, the first insulating member 161 includes a plurality of first insulating sub-members. One first hollowed-out portion 16112 may be formed between two adjacent first insulating sub-members 1614, and the first insulating sub-member 1614 is provided with the second hollowed-out portion 16111.

The first insulating member 161 may be a flat structure, such as a plate shape, a sheet shape, etc. The second insulating member 162 may be a flat structure, such as a sheet shape, a paper shape, etc. For example, the first insulating member 161 may be plate-shaped, and the second insulating member 162 may be paper-shaped. The material of the first insulating member 161 is an insulating material, and the material of the second insulating member 162 is an insulating material. The insulating material may be an organic insulating material, for example, plastic, rubber, etc. The insulating material may be an inorganic insulating material, for example, ceramic, glass, mica, etc. In some examples, a flexibility coefficient of the first insulating member 161 is the same as a flexibility coefficient of the second insulating member 162. In some other examples, the flexibility coefficient of the first insulating member 161 is less than the flexibility coefficient of the second insulating member 162. The flexibility coefficient is used to describe the deformation capability of a structure under external force, typically expressed as the displacement or deformation amount of the structure under unit external force. The first insulating member 161 and the second insulating member 162 may be partially overlapped, or the first insulating member 161 and the second insulating member 162 may be arranged in butt contact.

The first surface 1111 being the surface of the second portion 111 facing the electrode terminals can be understood as the first surface 1111 being an inner surface of the second portion 111.

The box body 11 has the accommodating cavity; and the second portion 111 covers the first portion 112 to enclose the accommodating cavity. One or more battery cell assemblies 18 are accommodated within the accommodating cavity. The box body 11 can serve to protect the battery cell assembly 18 and also facilitate concentrating the plurality of battery cell assemblies 18 together. In some examples, the box body 11 may include a lower box body and an upper box body. For example, the first portion 112 may be the lower box body and the second portion 111 may be the upper box body; or, for example, the first portion 112 may be the upper box body and the second portion 111 may be the lower box body.

In some examples, the first insulating member 161 is disposed opposite to a live part of the battery cell assembly 18, and the second insulating member 162 is staggered from the live part of the battery cell assembly 18.

The electrode terminal of the battery cell 12 may be a terminal post 123, a tab, etc. In some examples, the battery cell assembly 18 may only include the plurality of battery cells. In this case, the live part of the battery cell assembly 18 may be the electrode terminal of the battery cell 12. In some other examples, the battery cell assembly 18 may include the plurality of battery cells; and may further include a top plate, a bottom plate, two end plates, and two side plates. The plurality of battery cells 12 are disposed within a space enclosed by the top plate, the bottom plate, the two end plates, and the two side plates. In this case, the top plate, the bottom plate, the two end plates, the two side plates, and the plurality of battery cells 12 may constitute one battery module. The live part of the battery cell assembly 18 may be a busbar of the battery module, etc. The busbar is electrically connected to the electrode terminal of the battery cell 12.

The battery cell 12 may be a secondary battery, and the secondary battery refers to a battery cell 12 that can be used continually by activating an active material by means of charging after the battery cell 12 is discharged. The battery cell 12 may include, but not limited to, a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, and the like.

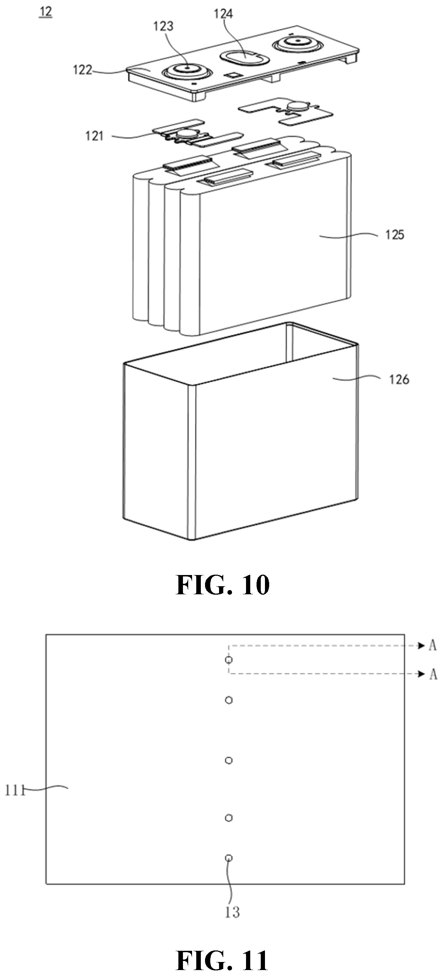

Referring to FIG. 10, the battery cell 12 may include a case 126, an electrode assembly 125, and a cover plate 122. The case 126 has a cavity and a mounting opening that are in communication. The number of the electrode assemblies 125 may be one or more. The electrode assembly 125 is installed within the cavity of the case 126. The cover plate 122 is connected to the case 126 and covers the mounting opening. The case 126 is filled with an electrolyte, such as an electrolyte solution.

The electrode assembly 125 may include an anode electrode plate, a cathode electrode plate, and a separator disposed between the anode electrode plate and the cathode electrode plate. During charging and discharging of the battery cell 12, active ions (e.g., lithium ions) intercalate into and deintercalate from the anode electrode plate and the cathode electrode plate reciprocally. The separator can, to a certain extent, function to prevent short circuit between the anode electrode plate and the cathode electrode plate, while allowing passage of the active ions.

The battery cell 12 may further include a safety vent 124 (also referred to as a pressure relief vent), two terminal posts 123, and two connecting components 121 (also referred to as current collector members). The safety vent 124 may be provided on the cover plate 122. For example, the safety vent 124 is fixed on the cover plate 122. The safety vent 124 is configured to be actuated to vent internal electrolyte when the internal pressure or temperature of the battery cell 12 reaches a threshold, thereby decreasing the internal pressure or temperature of the battery cell 12. For example, the safety vent 124 may be a temperature-sensitive vent, a pressure-sensitive vent, etc. The two terminal posts 123 may be provided on the cover plate 122. The two terminal posts 123 are a positive terminal post 123 and a negative terminal post 123, respectively. One terminal post 123 is correspondingly connected to one connecting component 121. The connecting component 121 is located between the cover plate 122 and the electrode assembly 125 and is used for electrically connecting the electrode assembly 125 and the terminal post 123. The case 126 is a hollow structure. A material of the case 126 may be metal or plastic. For example, the material of the case 126 may be copper, iron, aluminum, steel, aluminum alloy, etc.

In this embodiment, the first insulating member 161 is disposed opposite to a portion of the first surface 1111 excluding the protrusion portion 1112 and/or the opening portion 1113, and the second insulating member 162 is disposed opposite to the protrusion portion 1112 and/or the opening portion 1113 on the first surface 1111, thereby improving the insulation protection capability of the second portion 111, reducing the probability of electrical arcing between the live part of the battery cell assembly 18 and the second portion 111, and decreasing the probability of thermal runaway of the battery apparatus 1, and consequently improving the reliability of the battery apparatus 1.

In some embodiments, referring to FIG. 9, an overlapping region D exists between an edge of the first insulating member 161 and an edge of the second insulating member 162; and the edge of the second insulating member 162 is located between the edge of the first insulating member 161 and the first surface 1111.

In this embodiment, the overlapping region D exists between the edge of the first insulating member 161 and the edge of the second insulating member 162; and the edge of the second insulating member 162 is located between the edge of the first insulating member 161 and the first surface 1111. This can enhance the firmness of the connection between the first insulating member 161 and the second insulating member 162, thereby reducing the probability of the second insulating member 162 detaching from the protrusion portion 1112 and/or the opening portion 1113. It also solves the problem of a gap existing between the first insulating member 161 and the second insulating member 162, thereby further improving the insulation protection capability of the second portion 111, further decreasing the probability of electrical arcing between the live part of the battery cell assembly 18 and the second portion 111, and further decreasing the probability of thermal runaway of the battery apparatus 1.

In some embodiments, continuing to refer to FIG. 9, a width of the overlapping region D is greater than or equal to 2 mm.

For example, the width of the overlapping region D is 2 mm, 2.5 mm, 3 mm, 3.5 mm, 4 mm, 4.5 mm, 5 mm, 5.5 mm, 6 mm, 6.5 mm, 8 mm, 10 mm, etc.

In some embodiments, continuing to refer to FIG. 9, the second insulating member 162 includes a first covering portion 1624 covering a top portion of a side of the protrusion portion 1112 facing the battery cell assembly 18, a second covering portion 1627 located at the portion of the first surface 1111 exposed through the hollowed-out portion 1611 and spaced apart from the protrusion portion 1112, and a connecting portion 1625 connecting the first covering portion 1624 and the second covering portion 1627, the connecting portion 1625 being disposed in a suspended manner; or the second insulating member 162 includes a first covering portion 1624 covering a side of the protrusion portion 1112 facing the battery cell assembly 18, a second covering portion 1627 located at the portion of the first surface 1111 exposed through the hollowed-out portion 1611 and disposed in contact with the protrusion portion 1112, and a third covering portion located on a side surface of the protrusion portion 1112.

In some examples, the first covering portion 1624, the connecting portion 1625, and the second covering portion 1627 are an integrally formed structure. In some examples, the first covering portion 1624, the third covering portion, and the second covering portion 1627 are an integrally formed structure.

In this embodiment, the second insulating member 162 includes the first covering portion 1624, the connecting portion 1625, and the second covering portion 1627, which can reduce the difficulty of installation of the second insulating member 162. The second insulating member 162 includes the first covering portion 1624, the third covering portion, and the second covering portion 1627, which can increase the protection capability of the second insulating member 162.

In some embodiments, referring to FIG. 5 to FIG. 9, the protrusion portion 1112 includes a plurality of reinforcing ribs 11121, the plurality of reinforcing ribs 11121 extending from one side of the first surface 1111 of the second portion 111 to an opposite side, and dividing the first surface 1111 into a plurality of sub-surfaces 11111; the first insulating member 161 includes a plurality of first insulating sub-members 1614, one of the first insulating sub-members 1614 covering one of the sub-surfaces 11111, and one hollowed-out portion 1611 for exposing one of the reinforcing ribs 11121 being formed between two adjacent ones of the first insulating sub-members 1614; and the number of the second insulating members 162 is plural, and one of the second insulating members 162 covers one of the reinforcing ribs 11121.

In this embodiment, the hollowed-out portion 1611 for exposing the reinforcing rib 11121 is the aforementioned first hollowed-out portion 16112.

The number of the plurality of sub-surfaces 11111 is the same as that of the plurality of first insulating sub-members 1614. When the first surface 1111 has a plurality of reinforcing ribs 11121 and does not have an opening portion 1113, the number of the plurality of second insulating members 162 (i.e., the first insulating portions 1622) is the same as that of the plurality of reinforcing ribs 11121. When the first surface 1111 has opening portions 1113 and a plurality of reinforcing ribs 11121, the number of the plurality of second insulating members 162 (i.e., the first insulating portions 1622 and the second insulating portions 1621) is equal to the sum of the number of the plurality of reinforcing ribs 11121 and the number of the opening portions 1113.

The plurality of reinforcing ribs 11121 may be arranged parallel to each other, or may be arranged intersecting both lengthwise and crosswise.

The reinforcing rib 11121 is located between two adjacent sub-surfaces 11111. The sub-surface 11111 has an opening portion 1113.

In some examples, the first insulating sub-member 1614 is an integrally formed structure, and the first insulating sub-member 1614 has a hollowed-out portion 1611 (i.e., the second hollowed-out portion 16111) for exposing the opening portion 1113. In this case, the second hollowed-out portion 16111 may be a hole, for example, it may be a second through hole. In some other examples, the first insulating sub-member 1614 includes two sub-insulating members. The two sub-insulating members are spaced apart to constitute a hollowed-out portion 1611 (i.e., the second hollowed-out portion 16111) for exposing the opening portion 1113.

In this embodiment, the provided reinforcing ribs 11121 can increase the strength of the second portion 111. The configuration in which the second insulating member 162 covers the reinforcing ribs 11121 can reduce the probability of electrical arcing between the reinforcing ribs 11121 and the live part, thereby improving the reliability of the battery apparatus 1.

In some embodiments, referring to FIG. 11 to FIG. 13, the battery apparatus 1 further includes a mounting member 15 and a connecting member 13, where the mounting member 15 is disposed within the first portion 112; the opening portion 1113 is a mounting hole 11131 penetrating the second portion 111; and the first through hole 1623 exposes the mounting hole 11131; and the second portion 111 covers the first portion 112, and the connecting member 13 passes through the mounting hole 11131 and the first through hole 1623 from outside the second portion 111 and is then connected to the mounting member 15.

The number of mounting members 15 may be one or more, and the number of connecting members 13 is the same as that of mounting members 15. The mounting member 15 and the connecting member 13 may be connected through bolting, or may be connected through snap-fitting, or the like. The connecting member 13 may be a bolt, etc. The mounting member 15 may be a mounting sleeve, etc.

In some examples, a plurality of partition beams 14 are disposed within the first portion 112. The partition beams 14 can partition the accommodating cavity into a plurality of sub-cavities. A plurality of battery cells 12 or a plurality of battery modules are disposed within the sub-cavities. The plurality of partition beams 14 may be arranged parallel to each other, or may be arranged intersecting both lengthwise and crosswise. The mounting member 15 may be disposed on a partition beam 14.

In this embodiment, by using the mounting member 15 and the connecting member 13, the firmness of the connection between the first portion 112 and the second portion 111 can be enhanced. The configuration in which the second insulating member 162 covers the mounting hole 11131 can reduce the probability of electrical arcing between the mounting hole 11131 and the live part, thereby improving the reliability of the battery apparatus 1.

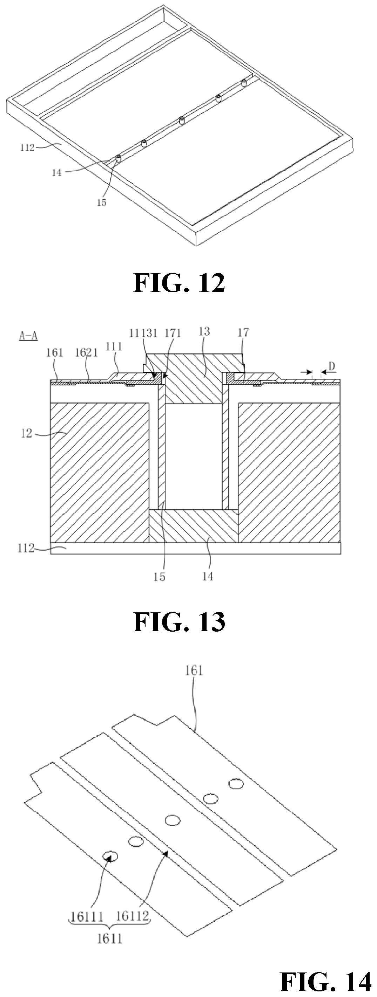

In some embodiments, referring to FIG. 14, the first insulating member 161 is an integrally formed structure; and the hollowed-out portion 1611 for exposing the mounting hole 11131 is a second through hole, where an overlapping region D exists between an edge of the second through hole of the first insulating member 161 and an outer edge of the second insulating member 162; and the outer edge of the second insulating member 162 is located between the edge of the second through hole of the first insulating member 161 and the first surface 1111.

In some embodiments, a width of the overlapping region D is greater than or equal to 2 mm. For example, the width of the overlapping region D is 2 mm, 2.5 mm, 3 mm, 3.5 mm, 4 mm, 4.5 mm, 5 mm, 5.5 mm, 6 mm, 6.5 mm, 8 mm, 10 mm, etc.

In this embodiment, the first insulating member 161 being an integrally formed structure can facilitate disposing the first insulating member 161 on the first surface 1111.

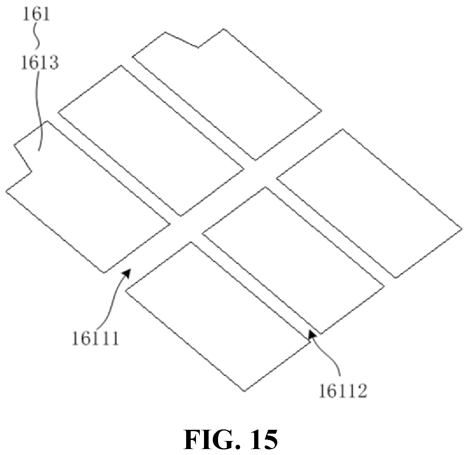

In some embodiments, referring to FIG. 15, the first insulating member 161 includes two sub-insulating members 1613, the two sub-insulating members 1613 being spaced apart to constitute the hollowed-out portion 1611 for exposing the mounting hole 11131.

In some examples, the two sub-insulating members 1613 and the second insulating member 162 are arranged overlapping each other. In some other examples, the sub-insulating member 1613 and the second insulating member 162 are arranged spaced apart.

The mounting hole 11131 is located between the two sub-insulating members 1613.

In this embodiment, the provided two sub-insulating members 1613 can decrease the difficulty of installation with the second insulating member 162, making installation more flexible.

In some embodiments, referring to FIG. 13, the battery apparatus 1 further includes a bushing 17 padded between the mounting member 15 and the first surface 1111, where the bushing 17 has a third through hole 171 for the connecting member 13 to pass through; and an edge of the first through hole 1623 of the second insulating member 162 is at least located on a side of an outer edge of the bushing 17 facing away from the first surface 1111.

In some examples, the edge of the first through hole 1623 of the second insulating member 162 extends to a position between the bushing 17 and the mounting member 15. In some other examples, the edge of the first through hole 1623 of the second insulating member 162 extends to contact an outer wall of the mounting member 15.

In some examples, the bushing 17 includes a first portion and a second portion that are connected, where the first portion is located between the mounting member 15 and the first surface 1111; and the second portion has the third through hole 171 and is located within the mounting hole 11131. The second portion may contact a hole wall of the mounting hole 11131.

In this embodiment, the provided bushing can reduce the probability of loosening between the connecting member 13 and the mounting member 15. The edge of the first through hole 1623 of the second insulating member 162 being at least located on the side of the outer edge of the bushing 17 facing away from the first surface 1111 can reduce the portion of the bushing 17 exposed through the first through hole 1623 of the second insulating member 162, thereby reducing the probability of electrical arcing between the bushing 17 and the live part, and consequently improving the reliability of the battery apparatus 1.

Additionally, it can improve the sealing performance between the second insulating member 162 and the bushing 17.

In some embodiments, a flexibility coefficient of the first insulating member 161 is less than a flexibility coefficient of the second insulating member 162.

For example, a ratio of the flexibility coefficient of the first insulating member 161 to the flexibility coefficient of the second insulating member 162 is 0.9, 0.8, 0.7, 0.5, 0.4, 0.3, 0.2, or 0.1, etc.

In this embodiment, the flexibility coefficient of the first insulating member 161 being less than the flexibility coefficient of the second insulating member 162 allows the second insulating member 162 to be more conveniently disposed at the protrusion portion 1112 and the opening portion 1113.

In some embodiments, the first insulating member 161 includes a mica plate or a polypropylene insulating film; and the second insulating member 162 includes a sprayed insulating layer or mica paper.

In some examples, the first insulating member 161 is a mica plate, and the second insulating member 162 is mica paper.

In this embodiment, the first insulating member 161 including the mica plate or the polypropylene insulating film and the second insulating member 162 including the sprayed insulating layer or mica paper can result in lower costs for the first insulating member 161 and the second insulating member 162.

In some embodiments, the first insulating member 161 covers the first surface 1111 of the second portion 111; and the second insulating member 162 covers the protrusion portion 1112, and/or the second insulating member 162 covers the portion of the first surface 1111 exposed through the hollowed-out portion 1611.

In this embodiment, adopting a covering manner can allow the insulating member 16 and the second portion 111 to form an integral whole, facilitating assembly with the first portion 112.

In the following, several embodiments of the present application are provided.

Embodiment 1: Referring to FIG. 2 to FIG. 4, the battery apparatus 1 includes a battery cell assembly 18, a box body 11, and an insulating member 16. The box body 11 includes a first portion 112 and a second portion 111, where the second portion 111 covers the first portion 112 for accommodating the battery cell assembly 18.

A first surface 1111 of the second portion 111 has an opening portion 1113, the first surface 1111 being a surface of the second portion 111 proximate to the first portion 112. The insulating member 16 is disposed on the first surface 1111 of the second portion 111. The insulating member 16 includes a first insulating member 161 and a second insulating member 162, where the first insulating member 161 covers the first surface 1111 of the second portion 111 and has a hollowed-out portion 1611, the hollowed-out portion 1611 exposing the opening portion 1113; and the second insulating member 162 covers the portion of the first surface 1111 exposed through the hollowed-out portion 1611 and has a first through hole 1623 communicating with the opening portion 1113.

The opening portion 1113 is a plurality of mounting holes 11131. The battery apparatus 1 further includes a mounting member 15 and a connecting member 13, where the mounting member 15 is disposed within the first portion 112; and the second portion 111 covers the first portion 112, and the connecting member 13 passes through the mounting hole 11131 and the first through hole 1623 from outside the second portion 111 and is then connected to the mounting member 15. The battery apparatus 1 further includes a bushing 17 padded between the mounting member 15 and the first surface 1111, where the bushing 17 has a third through hole 171 for the connecting member 13 to pass through; and an edge of the first through hole 1623 of the second insulating member 162 is at least located on a side of an outer edge of the bushing 17 facing away from the first surface 1111.

An overlapping region D exists between an edge of the first insulating member 161 and an edge of the second insulating member 162; and the edge of the second insulating member 162 is located between the edge of the first insulating member 161 and the first surface 1111. A width of the overlapping region D is greater than or equal to 2 mm. A flexibility coefficient of the first insulating member 161 is less than a flexibility coefficient of the second insulating member 162. The first insulating member 161 includes a mica plate or a polypropylene insulating film; and the second insulating member 162 includes a sprayed insulating layer or mica paper.

Embodiment 2: Referring to FIG. 2, FIG. 5, and FIG. 6, the battery apparatus 1 includes a battery cell assembly 18, a box body 11, and an insulating member 16. The box body 11 includes a first portion 112 and a second portion 111, where the second portion 111 covers the first portion 112 for accommodating the battery cell assembly 18.

A first surface 1111 of the second portion 111 has a protrusion portion 1112, the first surface 1111 being a surface of the second portion 111 proximate to the first portion 112. The insulating member 16 is disposed on the first surface 1111 of the second portion 111. The insulating member 16 includes a first insulating member 161 and a second insulating member 162, where the first insulating member 161 covers the first surface 1111 of the second portion 111 and has a hollowed-out portion 1611, the hollowed-out portion 1611 exposing the protrusion portion 1112; and the second insulating member 162 covers the protrusion portion 1112.

The protrusion portion 1112 is a plurality of reinforcing ribs 11121. The plurality of reinforcing ribs 11121 extend from one side of the first surface 1111 of the second portion 111 to an opposite side, and divide the first surface 1111 into a plurality of sub-surfaces 11111. The first insulating member 161 includes a plurality of first insulating sub-members 1614 spaced apart from each other, one of the first insulating sub-members 1614 covering one of the sub-surfaces 11111, and one hollowed-out portion 1611 for exposing one of the reinforcing ribs 11121 being formed between two adjacent ones of the first insulating sub-members 1614; and the number of the plurality of first insulating sub-members 1614 is the same as the number of the plurality of sub-surfaces 11111. The number of the second insulating members 162 is plural, and one of the second insulating members 162 covers one of the reinforcing ribs 11121.

An overlapping region D exists between an edge of the first insulating member 161 and an edge of the second insulating member 162; and the edge of the second insulating member 162 is located between the edge of the first insulating member 161 and the first surface 1111. A width of the overlapping region D is greater than or equal to 2 mm. A flexibility coefficient of the first insulating member 161 is less than a flexibility coefficient of the second insulating member 162. The first insulating member 161 includes a mica plate or a polypropylene insulating film; and the second insulating member 162 includes a sprayed insulating layer or mica paper.

Embodiment 3: Referring to FIG. 2, FIG. 7 to FIG. 9, and FIG. 11 to FIG. 15, the battery apparatus 1 includes a battery cell assembly 18, a box body 11, and an insulating member 16. The box body 11 includes a first portion 112 and a second portion 111, where the second portion 111 covers the first portion 112 for accommodating the battery cell assembly 18; and a first surface 1111 of the second portion 111 has a protrusion portion 1112 and an opening portion 1113, the first surface 1111 being a surface of the second portion 111 proximate to the first portion 112. The insulating member 16 is disposed on the first surface 1111 of the second portion 111. The insulating member 16 includes a first insulating member 161 and a second insulating member 162, where the first insulating member 161 covers the first surface 1111 of the second portion 111 and has a hollowed-out portion 1611, the hollowed-out portion 1611 exposing the protrusion portion 1112 and the opening portion 1113; and the second insulating member 162 covers the protrusion portion 1112, and the second insulating member 162 also covers a portion of the first surface 1111 exposed through the hollowed-out portion 1611, and has a first through hole 1623 communicating with the opening portion 1113.

The protrusion portion 1112 is a plurality of reinforcing ribs 11121. The plurality of reinforcing ribs 11121 extend from one side of the first surface 1111 of the second portion 111 to an opposite side, and divide the first surface 1111 into a plurality of sub-surfaces 11111.

The first insulating member 161 includes a plurality of first insulating sub-members 1614, one of the first insulating sub-members 1614 covering one of the sub-surfaces 11111, and one hollowed-out portion 1611 for exposing one of the reinforcing ribs 11121 being formed between two adjacent ones of the first insulating sub-members 1614; and the number of the plurality of first insulating sub-members 1614 is the same as the number of the plurality of sub-surfaces 11111. The first insulating member 161 may be an integrally formed structure, or may include a plurality of first insulating sub-members 1614 spaced apart from each other. The first insulating sub-member 1614 may be an integrally formed structure, or may include two sub-insulating members 1613 spaced apart from each other.

The sub-surface 11111 has an opening portion 1113. The opening portion 1113 is a plurality of mounting holes 11131. One first insulating sub-member 1614 may have a hollowed-out portion 1611 exposing the mounting hole 11131. On each sub-surface 11111, the number of mounting holes 11131 is the same as that of hollowed-out portions 1611.

The number of the second insulating members 162 is plural. The second insulating member 162 may include a first insulating portion 1622 and a second insulating portion 1621. One first insulating portion 1622 covers one reinforcing rib 11121. One second insulating portion 1621 covers a portion of the first surface 1111 exposed through one hollowed-out portion 1611 (i.e., a second hollowed-out portion 16111), and has a first through hole 1623 communicating with the mounting hole 11131.

The battery apparatus 1 further includes a mounting member 15 and a connecting member 13, where the mounting member 15 is disposed within the first portion 112; and the second portion 111 covers the first portion 112, and the connecting member 13 passes through the mounting hole 11131 and the first through hole 1623 from outside the second portion 111 and is then connected to the mounting member 15. The battery apparatus 1 further includes a bushing 17 padded between the mounting member 15 and the first surface 1111, where the bushing 17 has a third through hole 171 for the connecting member 13 to pass through; and an edge of the first through hole 1623 of the second insulating member 162 is at least located on a side of an outer edge of the bushing 17 facing away from the first surface 1111.

An overlapping region D exists between an edge of the first insulating member 161 and an edge of the second insulating member 162; and the edge of the second insulating member 162 is located between the edge of the first insulating member 161 and the first surface 1111. A width of the overlapping region D is greater than or equal to 2 mm. A flexibility coefficient of the first insulating member 161 is less than a flexibility coefficient of the second insulating member 162. The first insulating member 161 includes a mica plate or a polypropylene insulating film; and the second insulating member 162 includes a sprayed insulating layer or mica paper.

The description above is made of only implementations of the present application and is not intended to limit the patent protection scope of the present application. Any variations with equivalent structure and equivalent flow made using the specification and drawings of the present application, which are directly or indirectly applied in other relevant technical fields, shall equally fall within the patent protection scope of the present application.

## Claims

1. A battery apparatus, comprising:
a battery cell assembly comprising a plurality of battery cells, the battery cells having electrode terminals;
a box body comprising a first portion and a second portion, wherein the second portion covers the first portion to form an accommodating cavity for accommodating the battery cell assembly; and a first surface of the second portion has at least one of a protrusion portion and an opening portion, the first surface being a surface of the second portion facing the electrode terminals; and
an insulating member located between the first surface of the second portion and the battery cell assembly,
wherein the insulating member comprises a first insulating member and a second insulating member, wherein the first insulating member is disposed opposite to the first surface of the second portion, and the first insulating member has a hollowed-out portion, the hollowed-out portion exposing at least one of the protrusion portion and the opening portion; and the second insulating member is disposed opposite to at least one of the protrusion portion and a portion of the first surface exposed through the hollowed-out portion, and has a first through hole communicating with the opening portion.

2. The battery apparatus according to claim 1, wherein
an overlapping region exists between an edge of the first insulating member and an edge of the second insulating member; and the edge of the second insulating member is located between the edge of the first insulating member and the first surface.

3. The battery apparatus according to claim 2, wherein a width of the overlapping region is greater than or equal to 2 mm.

4. The battery apparatus according to claim 1, wherein
the second insulating member comprises a first covering portion covering a side of the protrusion portion facing the battery cell assembly, a second covering portion located at the portion of the first surface exposed through the hollowed-out portion and spaced apart from the protrusion portion, and a connecting portion connecting the first covering portion and the second covering portion, the connecting portion being disposed in a suspended manner.

5. The battery apparatus according to claim 1, wherein the second insulating member comprises a first covering portion covering a side of the protrusion portion facing the battery cell assembly, a second covering portion located at the portion of the first surface exposed through the hollowed-out portion and disposed in contact with the protrusion portion, and a third covering portion located on a side surface of the protrusion portion.

6. The battery apparatus according to claim 1, wherein the protrusion portion comprises a plurality of reinforcing ribs, the plurality of reinforcing ribs extending from one side of the first surface of the second portion to an opposite side, and dividing the first surface into a plurality of sub-surfaces; the first insulating member comprises a plurality of first insulating sub-members, one of the first insulating sub-members covering one of the sub-surfaces, and one said hollowed-out portion for exposing one of the reinforcing ribs being formed between two adjacent ones of the first insulating sub-members; and the number of the second insulating members is plural, and one of the second insulating members covers one of the reinforcing ribs.

7. The battery apparatus according to claim 1, wherein
the battery apparatus further comprises a mounting member and a connecting member, wherein
the mounting member is disposed within the first portion; the opening portion is a mounting hole penetrating the second portion; and the first through hole exposes the mounting hole; and
the second portion covers the first portion, and the connecting member passes through the mounting hole and the first through hole from outside the second portion and is then connected to the mounting member.

8. The battery apparatus according to claim 7, wherein
the first insulating member is an integrally formed structure; and the hollowed-out portion for exposing the mounting hole is a second through hole, wherein
an overlapping region exists between an edge of the second through hole of the first insulating member and an outer edge of the second insulating member; and the outer edge of the second insulating member is located between the edge of the second through hole of the first insulating member and the first surface.

9. The battery apparatus according to claim 7, wherein the first insulating member comprises two sub-insulating members, the two sub-insulating members being spaced apart to constitute the hollowed-out portion for exposing the mounting hole.

10. The battery apparatus according to claim 7, wherein the battery apparatus further comprises a bushing padded between the mounting member and the first surface, wherein the bushing has a third through hole for the connecting member to pass through; and an edge of the first through hole of the second insulating member is at least located on a side of an outer edge of the bushing facing away from the first surface.

11. The battery apparatus according to claim 1, wherein a flexibility coefficient of the first insulating member is less than a flexibility coefficient of the second insulating member.

12. The battery apparatus according to claim 11, wherein the first insulating member comprises a mica plate or a polypropylene insulating film; and the second insulating member comprises a sprayed insulating layer or mica paper.

13. The battery apparatus according to claim 1, wherein the first insulating member covers the first surface of the second portion; and the second insulating member covers the protrusion portion.

14. The battery apparatus according to claim 1, wherein the first insulating member covers the first surface of the second portion; and the second insulating member covers the portion of the first surface exposed through the hollowed-out portion.

15. An electrical device, comprising a device main body and the battery apparatus according to any one of claims 1 to 12, wherein the battery apparatus is disposed in the device main body.
